# EUROPEAN PATENT SPECIFICATION

(11) **EP 1 946 662 B1**
(45) Date of publication and mention of the grant of the patent: **29.09.2010**
(21) Application number: 07290080.6
(22) Date of filing: 22.01.2007
(51) Int. Cl.: B29D 35/14, A43B 5/16, B32B 27/04, B32B 27/12

(54) **Skate boot**
Schlittschuh
Chaussure de patin

(43) Date of publication of application: 23.07.2008
(73) Proprietor: Bauer Hockey Corp., St-Jérôme QC J7Y 5G2 (CA)
(72) Inventor: Jou, Wern-Shiarng, Kaohsiung (TW); Chien, Ming-Shou, Yangmei Township, Taoyuan County 326 (TW); Chen, Tai-Heng, Neihu District 114, Taipei (TW); Champagne, Gaétan, Saint Colomban, Québec J5K 1Y7 (CA)
(74) Representative: Burbaud, Eric

(56) References cited:
- EP-A- 1 582 107
- EP-A1- 1 384 568
- FR-A- 2 298 288
- US-B1- 6 499 233
- US-B1- 6 558 784

## Description

### FIELD OF THE INVENTION

The present invention relates to a lasted skate boot with an outer shell comprising cloth material laminated to a support made of a non-woven fabric, and wherein the outer shell further comprises plastic material fused with the non-woven fabric. The invention also relates to a method of making a lasted skate boot comprising such outer shell.

### BACKGROUND OF THE INVENTION

The construction of sporting boots used for sporting activities such as ice skating, roller skating, hiking, trekking and cross-country skiing has become quite complex over recent years. Existing sporting boots often include multiple different components, and multiple different materials in order to provide the sporting boot with the performance and aesthetic requirements imposed by consumers. As such, over recent years different manufacturing processes have been developed and new materials have been used.

U.S. Patent 3,807,062 discloses a boot having an inner layer formed of a rigid material for providing rigidity at selected locations such as the sole, heel and ankle portion of the foot; and an outer layer, which is molded over the inner layer. The boot is thus reinforced at selected area while other areas are more flexible.

U.S. Patent 4,509,276 discloses a skate boot made of a lower exterior molded rigid plastic portion and intermediate and upper portions made of pliable material to allow forward flexure and torsional flexibility in the ankle area.

U.S. Patent 4,777,741 discloses an article of footwear such as a shoe or skate, which comprises a molded outer shell and a semi-rigid molded tongue portion to close the footwear.

U.S. Patent 5,339,544 discloses a footwear comprising a first component made of a single piece of molded synthetic material having a rear upper portion which extend from an insole, and a second component made of soft material having a front upper portion and a lining. The two components are connected together with the lining of the second component inserted inside the rear portion of the first component.

U.S. Patent 6,499,233 discloses a footwear comprising a structural molded inner shell for supporting and enclosing the foot and an outer skin bonded onto the outer sides of the inner shell.

French Patent Application 2,298,288 discloses a shell having an external portion, which is moulded and comprises an outer layer, a woven layer and a non-woven layer made of polyamide fibres such as NYLON (KEVLAR), NYLON-11, NYLON-12 or NYLON-13. The shell is made by injection moulding of a synthetic material such as polyurethane rubber. The synthetic material is injected in the mould and the layers are entirely integrated in the synthetic material after injection of this material in the mould.

These designs effectively reduce the number of components utilized in the construction of footwear or skate. However, the appearance of some of these designs is not always appealing.

Thus there is a need in the industry for a skate boot having fewer components, providing good foot support and has an exterior look which may be made more appealing to the consumer.

### SUMMARY OF THE INVENTION

As embodied and broadly described therein, the present invention provides a lasted skate boot as defined in claim 1.

As embodied and broadly described therein, the invention also provides a method of making a lasted skate boot as defined in claim 12.

These and other aspects and features of the present invention will now become apparent to those of ordinary skill in the art upon review of the following description of specific embodiments of the invention in conjunction with the accompanying drawings.

### BRIEF DESCRIPTION OF THE DRAWINGS

A detailed description of examples of embodiments of the present invention is provided hereinbelow with reference to the following drawings, in which:
Figure 1 is a side view of a human foot with the integument of the foot shown in stippled lines and the bones shown in solid lines;
Figure 2 is a front view of the human foot of Figure 1;
Figure 3 is a perspective view of an ice skate comprising an outer shell in accordance with a the present invention;
Figure 4 is an exploded view of the ice skate of Figure 3
Figure 5 is a perspective view of male and female sections of a mold for making the outer shell;
Figure 6 is side view of the male and female sections of the mold of Figure 5, where the sheet used for making the outer shell is shown;
Figure 7 is side view of the male and female sections of the mold of Figure 5 with the sheet placed over the male section of the mold;
Figure 8 is a cross-sectional view of the male and female sections, once closed and with the sheet in the mold cavity; and
Figure 9 is a perspective view of the outer shell.

In the drawings, embodiments of the invention are illustrated by way of example. It is to be expressly understood that the description and drawings are only for the purposes of illustration and as an aid to understanding, and are not intended to be a definition of the limits of the invention.

### DETAILED DESCRIPTION OF THE EMBODIMENTS

To facilitate the description, any reference numerals designating an element in one figure will designate the same element if used in any other figures. In describing the embodiments, specific terminology is resorted to for the sake of clarity but the invention is not intended to be limited to the specific terms so selected, and it is understood that each specific term comprises all equivalents.

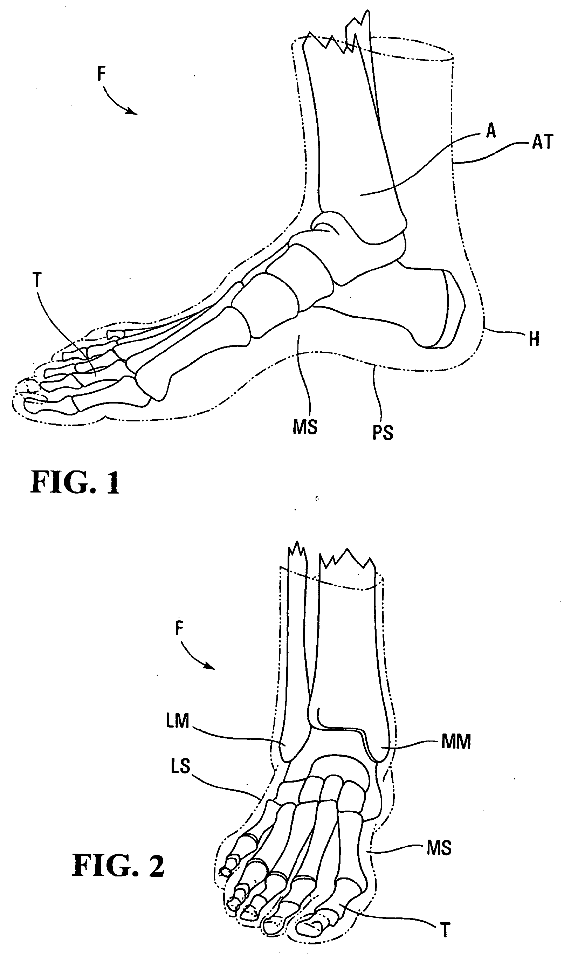

Shown in Figures 1 and 2 is a typical human foot F that includes toes T, a plantar surface PS, a medial side MS and a lateral side LS. In addition, the human foot includes a heel H, an Achilles tendon AT and an ankle A having a lateral malleolus LM and a medial malleolus MM, the lateral malleolus LM being at a lower position than the medial malleolus MM.

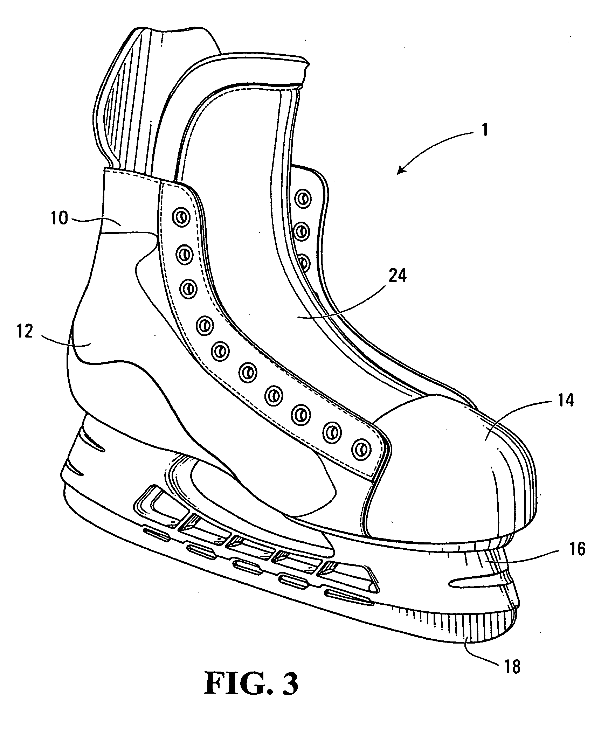

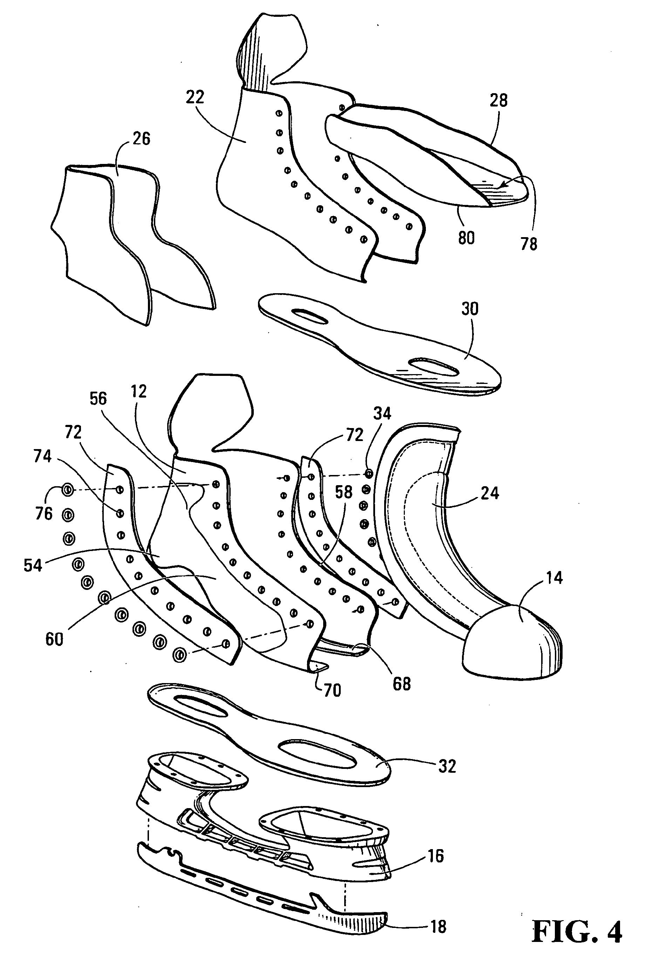

Shown in Figures 3 and 4 is an ice skate 1 that comprises a skate boot 10 suitable for enclosing a right human foot F. The ice skate 1 has an outer shell 12, a toe cap 14, a tongue 24, a padding element 26 (optional component), an inner lining 22, a footbed 28, an insole 30, an outsole 32, an ice skate blade holder 16 and a blade 18.

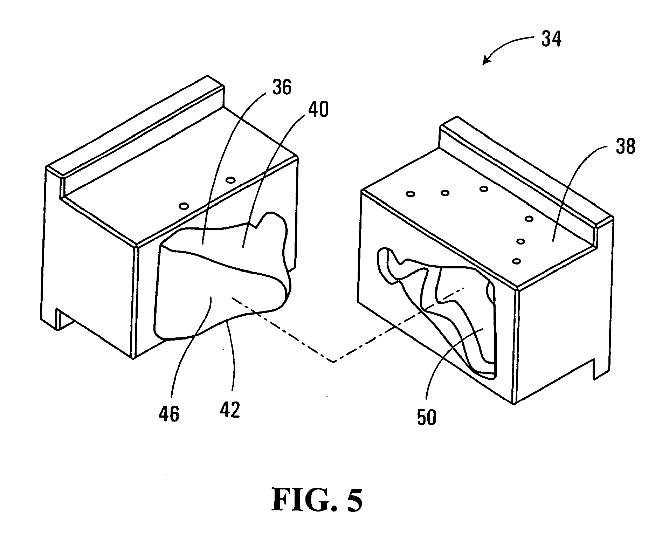

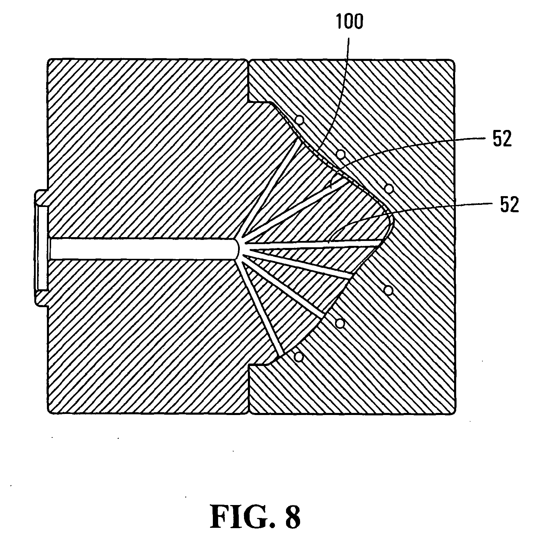

The method of making the outer shell 12 will now be described in more detail below with respect to Figures 5 to 9. Figures 5 to 8 show a mold 34 for making the outer shell 12. The mold 34 is a male-female mold having a male section 36 and a female section 38 for defining a mold cavity therebetween.

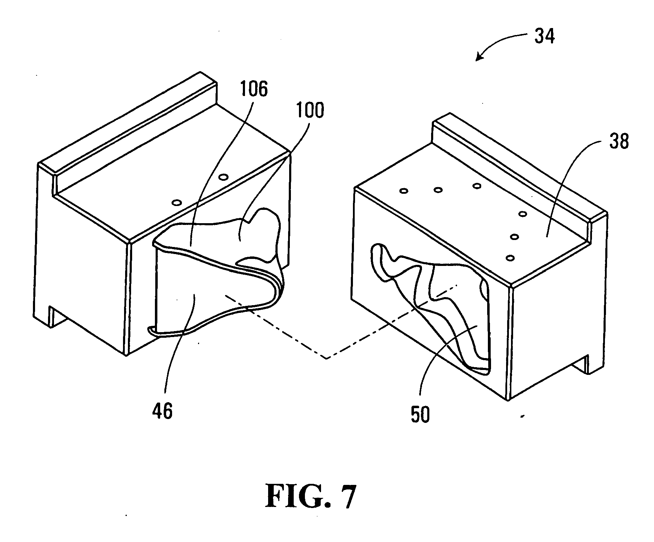

As best seen in Figures 5 to 7, the male section 36 has medial and lateral sides 40, 42, a rear portion 44 and a bottom portion 46 for defining a three dimensional shape corresponding to the external three dimensional shape of the foot F. The rear portion 44 may further comprise an upper portion 48 corresponding to the shape of the Achilles tendon AT. The female section 38 has a recess 50 for receiving the male section 36. As seen in Figure 7, the male section 36 comprises a plurality of inner channels 52 for admitting liquid plastic material in the mold cavity.

In order to make the outer shell 12, a pre-cut sheet 100 made of cloth material (e.g. polyester, nylon, carbon fibers, synthetic fibers or fiberglass) laminated to a support made of non-woven fabric. As it is well known in the art, non-woven fabric is manufactured by putting small fibers together in the form of a sheet and then binding them either with an adhesive or by interlocking them with serrated needles such that the inter-fiber friction results in a strong fabric. The sheet 100 is after placed on the male section 36 of the mold such that the non-woven fabric contacts the sides and rear portions 40, 42, 44 of the male section 36 of the mold.

The male and female sections 36, 38 of the mold are then closed and liquid plastic material is injected in the inner channels 52 at a temperature of between 160°C and 200°C and at a pressure of between 6,79 MPa (985 psi) and 7 MPa (1015 psi) such that the liquid plastic material spreads on the sheet, pushes the sheet 100 against the recess 50 of the female section of the mold, fills the mold cavity and fuses with the non-woven fabric to form the outer shell 12. It is understood that non-woven fabric has to be of a certain thickness depending on the type of cloth used in order to create a barrier to prevent the plastic from going through the cloth during the injection process, while the plastic is in its liquid form. For example, for a cloth made of polyester TH3076/600D SILVER, a non-woven fabric having a thickness of 0.8mm is used. There is a number of plastic materials that are suitable and can be used such as but not limited to: surlyn, ethylene vinyl acetate (EVA), thermoplastic polyurethane (TPU), nylon66, hytrel, polypropylene, polyethylene.

After cooling the male and female sections 36, 38 of the mold are opened and the outer shell 12 is finally removed from the mold. The excess material around the perimeter of the outer shell 12 may be trimmed after.

It is understood that the plastic material enters in a liquid form in the mold, fuses with the non-woven material, and after about 10 seconds, the plastic is in a solid form such that the outer shell is made and the mold is open. The cycle time of the injection may be between 60 seconds and 90 seconds. For example, it may take about 20 seconds to put the sheet in the mold, about 45 seconds to close the mold and inject the liquid plastic, about 10 seconds for cooling, and about 15 seconds to open the mold and remove the outer shell.

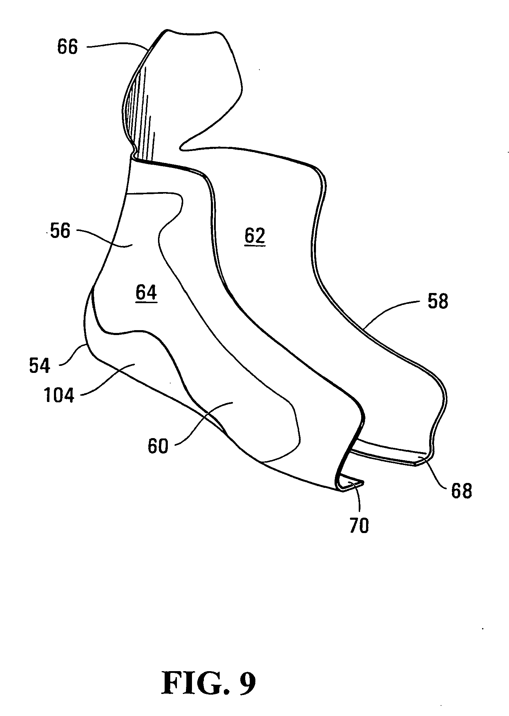

As shown in Figure 9, the outer shell 12 comprises a heel portion 54 for receiving the heel H, an ankle portion 56 for receiving the ankle A and medial and lateral side portions 58, 60 for facing the medial and lateral sides MS, LS respectively. These portions 54, 56, 58, 60 form a foot receiving cavity that conforms to the general shape of the foot F. The medial and lateral side portions 58, 60 extend forwardly from the heel portion 54. The heel portion 54 may be substantially cup shaped for following the contour of the heel H. The outer shell 12 has an inner surface 62 facing the foot F when in use, and an outer surface 64. Because the inner surface 62 is made of plastic fused with the non-woven fabric of the sheet 100, the outer shell 12 offers a good resistance to wear, abrasion, cuts, impacts and moisture.

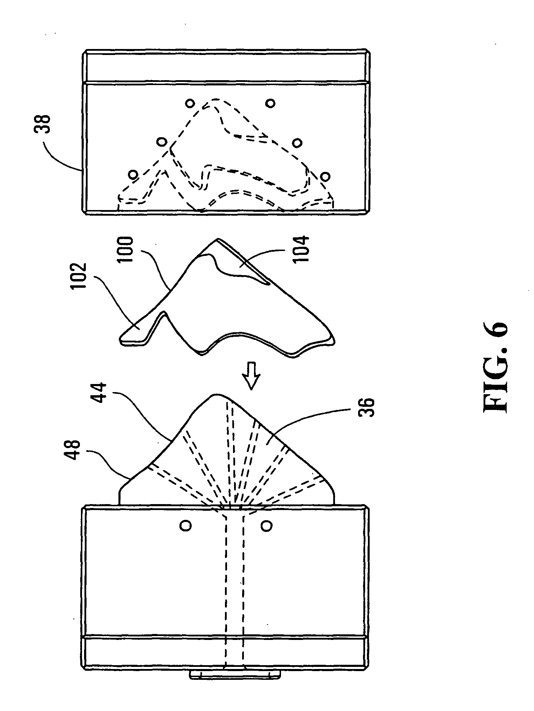

The outer shell 12 may also comprise a tendon guard portion 66 for covering the Achilles tendon AT. As seen in Figure 6, the sheet 100 has then a portion 102 extending over the upper portion 48 of the male section 36 of the mold. It is understood that the portion 102 may be integrally formed with the sheet 100 (as shown in Figure 6) or can be a separate sheet stitched to the sheet 100. The separate sheet may be made of a different material than that of the outer shell 12. In some cases, a foxing portion 104 made of flexible TPU or PVC material may be affixed to the sheet 100 prior to placing the sheet 100 in the mold.

The ankle portion 56 may comprise a medial cup-shaped depression for receiving the medial malleolus MM and a lateral cup-shaped depression for receiving the lateral malleolus LM, the lateral depression being located slightly lower than the medial depression, for conforming to the morphology of the foot F.

The medial and lateral side portions 58, 60 of the outer shell 12 may comprise respective medial and lateral skirts 68, 70 that are integrally formed therewith and extend downwardly therefrom. It is understood that the sheet 100 has then a portion 106 extending over the bottom portion 46 of the male section 36 of the mold.

Once the outer shell 12 has been obtained after the injection process, the inner lining 22 may then be glued or sewed to the inner surface 62 of outer shell 12. The inner lining 22 is made of a layer of soft material such as a sheet of polyester fabric or synthetic leather or fabric made from 100% nylon fibers, which are laminated with a 1.5 to 2mm layer of foam. The inner lining 22 comprises an inner surface that is adapted to contact the skin of the foot F in use. The padding element 26 can also be added between the inner surface 62 of the outer shell 12 and the inner lining 22.

As shown in Figure 4, two narrow bands 72 are secured to the upper portion of each of the side portions 58, 60. The narrow bands 72 are made of fabric, textile, soft PVC materials, synthetic leather or leather. In an alternative embodiment, a single continuous band that covers the upper portion of each of side portions 58, 60 and wraps around the rear of the ankle portion 56 can be used instead of two distinct bands 72.

Apertures 74 are then punched through the narrow bands 72, the outer shell 12 and the inner lining 22. Once punched, the apertures 74 are reinforced by metallic rivets (eyelets) 76 or any suitable means as is well known in the art of footwear construction.

The tongue 24 and toe cap 14 are then affixed to the outer shell 12. In a non-limiting embodiment, the toe cap 14 and the tongue 24 are pre-assembled prior to installation to outer shell 12. The tongue 24 is affixed to the toe cap 14 and extends upwardly and rearwardly from the toe cap 14 for covering the forefoot of the foot F. The frontal edge of tongue 24 can be sewn directly to toe cap 14 or can be fixed in an alternative manner known in the art. The toe cap 14 may be secured to the outer shell 12 by sewing both sides of toe cap 14 to each ends of the side portions 68, 70.

A last is afterwards inserted into the inside cavity of the outer shell 12 in order to complete the construction of the boot. The last enables the outer shell 12 to maintain its shape when the skirts 68, 70 are affixed to the insole 32. A light sanding of the skirt 68, 70 and the insole 32 60 may be performed to partially even the lower surface of the boot and provide a flat surface on which the outsole 32 can be mounted. The blade holder 16 is then mounted on the outsole 32.

The footbed 28 can be inserted into the outer shell 12 in order to sit upon the insole 30. The footbed 28 has an upper surface 78 for receiving the plantar surface PS of the foot F, and a padding wall 80 that projects upwardly from the upper surface for partially cupping the heel H and extending up to a medial line of the foot F.

The above description of the embodiments should not be interpreted in a limiting manner since other variations, modifications and refinements are possible within the scope of the present invention as defined in the appended claims.

## Claims

1. A lasted skate boot (10) for enclosing and supporting a human foot when in use, the foot having a heel, an Achilles tendon, an ankle with a medial malleolus and a lateral malleolus, a plantar surface, medial and lateral sides, an upper frontal portion and toes, said boot (10) comprising: (a) an outer shell (12) comprising a heel portion (54) for surrounding the heel, an ankle portion (56) for surrounding the ankle, medial and lateral side portions (58, 60) for enclosing the medial and lateral sides of the foot respectively, (b) an inner lining (22) made of a soft material and having an inner surface for contacting the foot, (c) a toe box (14) for enclosing the toes, and (d) a tongue (24) for facing the upper frontal portion of the foot, said tongue extending upwardly and rearwardly from said toe box, said skate boot **being characterized in that** (i) said outer shell (12) comprises a first layer made of non-woven fabric fused with injected plastic material and a second layer made of cloth material and devoid of said injected plastic material, said first layer having been laminated to said second layer, (ii) said toe box (14) is affixed to said medial and lateral side portions (58, 60) of said outer shell, and (iii) said inner lining (22) is affixed to an inner surface (62) of said outer shell (12).

2. A lasted skate boot as defined in claim 1, further comprising an insole (30) for facing the plantar surface of the foot.

3. A lasted skate boot as defined in claim 2, wherein each of said medial and lateral side portions comprises a skirt (68; 70) projecting downwardly from its lower edge.

4. A lasted skate boot as defined in claim 3, wherein said skirt (68; 70) overlaps a portion of said insole (30) and is affixed to said insole.

5. A lasted skate boot as defined in claim 1, wherein said heel portion (54) is substantially cup shaped for following the contour of the heel of the foot.

6. A lasted skate boot as defined in claim 1, wherein said surface of said inner lining (22) is intended for contact with the heel, ankle and lateral and medial sides of the foot.

7. A skate boot as defined in claim 1, further comprising a footbed (28) mounted inside said outer shell (12), said footbed comprising an upper surface (78) for receiving the plantar surface of the foot and a wall (80) projecting upwardly from said upper surface, said wall partially cupping the heel and extending up to a medial line of the foot.

8. A skate boot as defined in claim 1, wherein said outer shell (12) further comprises a tendon guard (66) for facing at least partially a rear portion of the Achilles tendon.

9. A skate boot as defined in claim 4, further comprising an outsole (32) affixed to a bottom surface of said insole.

10. An ice skate (1) comprising a skate boot (10) as defined in claim 9, said ice skate comprising an ice skate blade holder (16) mounted to a bottom surface of said outsole (32).

11. An ice skate comprising a skate boot as defined in claim 2, said ice skate comprising an ice skate blade holder (16) mounted to a bottom surface of said insole.

12. A method of making a lasted skate boot (10) for enclosing a human foot when in use, the foot having a heel, an Achilles tendon, an ankle with a medial malleolus and a lateral malleolus, a plantar surface, medial and lateral sides and toes, said method comprising: (a) providing a male-female mold (34) having male and female sections (36, 38) for defining a mold cavity therebetween, the male section (36) having sides (40, 42), a rear portion (44) and a bottom portion (46) for defining a three dimensional shape corresponding to the external three dimensional shape of the foot, the female section (38) defining a recess (50) for receiving the male section, the male section comprising a plurality of inner channels (52) for admitting liquid plastic material in the mold cavity; (b) providing a pre-cut sheet (100) made of cloth material laminated to a non-woven fabric; (c) placing the sheet on the male section (36) of the mold such that the non-woven fabric contacts the sides and rear portion of the male section (36) of the mold; (d) closing the male and female sections (36, 38) of the mold, said method **being characterized in that** it comprises the step of (e) injecting liquid plastic material in the inner channels (52) at a temperature of between 160°C and 200°C and at a pressure of between 6,79 MPa (985 psi) and 7 MPa (1015 psi) such that the liquid plastic material spreads on the sheet (100), pushes the sheet against the recess (50) of the female section (38) of the mold, fills the mold cavity and fuses with the non-woven fabric only to form, after cooling, an outer shell (12) having a first layer made of non-woven fabric fused with injected plastic material and a second layer made of cloth material devoid of injected plastic material, said outer shell comprising a heel portion (54) for surrounding the heel, an ankle portion (56) for surrounding the ankle, medial and lateral side portions (58, 60) for enclosing the medial and lateral sides of the foot respectively; said method further comprising (f) opening the male and female sections of the mold; and (g) removing the outer shell (12) from the mold.

13. A method as defined in claim 12, wherein the sheet (100) further partially extends over the bottom portion of the male section such that the outer shell further comprises medial and lateral skirts (68, 70) after step (e).

14. A method as defined in claim 13, further comprising positioning an insole (30), a toe box (14) and the outer shell over a last; and affixing the medial and lateral skirts (68, 70) to the insole.

15. A method as defined in claim 14 further comprising affixing a rigid outsole (32) to a bottom portion of said insole.

16. A method as defined in claim 15 further comprising affixing an ice blade holder (16) to a bottom surface of said rigid outsole.

17. A method as defined in claim 16 further comprising affixing a layer of material (72; 74) to an external surface of the outer shell.

18. A method as defined in claim 12 further comprising affixing an inner lining (22) to an inner surface of the outer shell.

19. A method as defined in claim 18 further comprising placing a padding element (26) between the inner lining and the inner surface of the outer shell.

20. A method as defined in claim 14, wherein the sheet further comprises an upper portion facing an upper part of the rear portion of the male section of the mold such that the outer shell further comprises a tendon guard for facing the Achilles tendon after step (e).

21. A method as defined in claim 12, wherein the liquid plastic material is selected from the group comprising surlyn, ethylene vinyl acetate, thermoplastic polyurethane, nylon66, hytrel, polypropylene and polyethylene.

22. A method as defined in claim 21, wherein the cloth material is selected from the group of polyester, nylon, carbon fibers, synthetic fibers and fiberglass.

## Patentansprüche

1. Leisten-Schlittschuhstiefel (10) zum Umschließen und Stützen eines menschlichen Fußes im Gebrauch, wobei der Fuß eine Ferse, eine Achillessehne, ein Fußgelenk mit einem Innenknöchel und einem Außenknöchel, eine Sohlenfläche, eine Innenseite und eine Außenseite, einen oberen vorderen Abschnitt und Zehen aufweist, und wobei der Stiefel (10) Folgendes umfasst: (a) eine Außenschale (12) mit einem Fersenabschnitt (54) zum Umschließen der Ferse, einen Fußgelenkabschnitt (56) zum Umschließen des Fußgelenks, einen inneren und einen äußeren Seitenabschnitt (58, 60) zum Umschließen der Innen- bzw. Außenseite des Fußes, (b) ein Innenfutter (22) aus einem weichen Material und mit einer mit dem Fuß in Kontakt stehenden Innenseite, (c) eine Zehenkappe (14) zum Umschließen der Zehen, und (d) eine Zunge (24), die dem oberen vorderen Abschnitt des Fußes gegenüberliegt, wobei sich die Zunge von der Zehenkappe nach oben und nach hinten erstreckt, wobei der Schlittschuhstiefel **dadurch gekennzeichnet ist, dass** (i) die Außenschale (12) eine erste Schicht aus einem mit spritzgegossenem Kunststoff verschmolzenen Vliesstoff und eine zweite Schicht aus Stoff und ohne den spritzgegossenen Kunststoff umfasst, wobei die erste Schicht auf die zweite Schicht kaschiert wurde, (ii) die Zehenkappe (14) an dem inneren und dem äußeren Seitenabschnitt (58, 60) der Außenschale befestigt ist, und (iii) das Innenfutter (22) an einer Innenseite (62) der Außenschale (12) befestigt ist.

2. Leisten-Schlittschuhstiefel nach Anspruch 1, der ferner eine Innensohle (30) umfasst, die der Sohlenfläche des Fußes gegenüberliegt.

3. Leisten-Schlittschuhstiefel nach Anspruch 2, wobei der innere und der äußere Seitenabschnitt jeweils eine Schürze (68; 70) umfasst, die von seinem unteren Rand nach unten ragt.

4. Leisten-Schlittschuhstiefel nach Anspruch 3, wobei die Schürze (68; 70) einen Abschnitt der Innensohle (30) überlappt und an der Innensohle befestigt ist.

5. Leisten-Schlittschuhstiefel nach Anspruch 1, wobei der Fersenabschnitt (54) im Wesentlichen becherförmig ist, um dem Umriss der Ferse des Fußes zu folgen.

6. Leisten-Schlittschuhstiefel nach Anspruch 1, wobei die Oberfläche des Innenfutters (22) zum Kontakt mit der Ferse, dem Fußgelenk und der Innen- und Außenseite des Fußes bestimmt ist.

7. Schlittschuhstiefel nach Anspruch 1, der ferner ein innerhalb der Außenschale (12) angebrachtes Fußbett (28) umfasst, wobei das Fußbett eine Oberseite (78) zur Aufnahme der Sohlenfläche des Fußes und eine von der Oberseite nach oben ragende Wand (80) umfasst, wobei die Wand teilweise die Ferse umgibt und sich bis zu einer Mittellinie des Fußes erstreckt.

8. Schlittschuhstiefel nach Anspruch 1, wobei die Außenschale (12) ferner einen Sehnenschutz (66) umfasst, der wenigstens teilweise einem hinteren Abschnitt der Achillessehne gegenüberliegt.

9. Schlittschuhstiefel nach Anspruch 4, der ferner eine an einer Unterseite der Innensohle befestigte Außensohle (32) umfasst.

10. Schlittschuh (1) mit einem Schlittschuhstiefel (10) nach Anspruch 9, wobei der Schlittschuh eine Schlittschuhkufenhalterung (16) umfasst, die an einer Unterseite der Außensohle (32) befestigt ist.

11. Schlittschuh mit einem Schlittschuhstiefel nach Anspruch 2, wobei der Schlittschuh eine Schlittschuhkufenhalterung (16) umfasst, die an einer Unterseite der Innensohle befestigt ist.

12. Verfahren zur Herstellung eines Leisten-Schlittschuhstiefels (10) zum Umschließen eines menschlichen Fußes im Gebrauch, wobei der Fuß eine Ferse, eine Achillessehne, ein Fußgelenk mit einem Innenknöchel und einem Außenknöchel, eine Sohlenfläche, eine Innenseite und eine Außenseite und Zehen aufweist, wobei das Verfahren die folgenden Schritte umfasst: (a) Bereitstellen einer Positiv/NegativForm (34) mit einem Oberteil und einem Unterteil (36, 38), um dazwischen einen Formhohlraum zu definieren, wobei das Oberteil (36) Seiten (40, 42), einen hinteren Abschnitt (44) und einen unteren Abschnitt (46) zum Definieren einer dreidimensionalen Form besitzt, die der äußeren dreidimensionalen Form des Fußes entspricht, wobei das Unterteil (38) eine Ausnehmung (50) zur Aufnahme des Oberteils definiert, wobei das Oberteil mehrere innere Kanäle (52) umfasst, um flüssigen Kunststoff in den Formhohlraum einzuleiten; (b) Bereitstellen einer vorgeschnittenen Lage (100) aus Stoffmaterial, das auf einen Vliesstoff kaschiert ist; (c) Aufbringen der Lage auf das Oberteil (36) der Form, so dass der Vliesstoff die Seiten und den hinteren Abschnitt des Oberteils (36) der Form berührt; (d) Schließen des Ober- und Unterteils (36, 38) der Form, wobei das Verfahren **dadurch gekennzeichnet ist, dass** es den Schritt (e) des Einspritzens von flüssigem Kunststoff in die inneren Kanäle (52) bei einer Temperatur zwischen 160°C und 200°C und bei einem Druck zwischen 6,79 MPa (985 psi) und 7 MPa (1015 psi) umfasst, so dass sich der flüssige Kunststoff auf der Lage (100) ausbreitet, die Lage gegen die Ausnehmung (50) des Unterteils (38) der Form drückt, den Formhohlraum ausfüllt und mit dem Vliesstoff verschmilzt, nur um nach dem Abkühlen eine Außenschale (12) mit einer ersten Schicht aus Vliesstoff, die mit dem eingespritzten Kunststoff verschmolzen ist, und einer zweiten Schicht aus Stoffmaterial ohne eingespritzten Kunststoff zu bilden, wobei die Außenschale einen Fersenabschnitt (54) zum Umschließen der Ferse, einen Fußgelenksabschnitt (56) zum Umschließen des Fußgelenks, einen inneren und einen äußeren Seitenabschnitt (58, 60) zum Umschließen der Innen- bzw. Außenseite des Fußes umfasst; wobei das Verfahren ferner (f) das Öffnens des Ober- und Unterteils der Form; und (g) das Herausnehmen der Außenschale (12) aus der Form umfasst.

13. Verfahren nach Anspruch 12, wobei die Lage (100) sich ferner teilweise über den unteren Abschnitt des Oberteils erstreckt, so dass die Außenschale ferner nach Schritt (e) eine innere und äußere Schürze (68, 70) umfasst.

14. Verfahren nach Anspruch 13, bei dem ferner eine Innensohle (30), eine Zehenkappe (14) und die Außenschale über einem Leisten positioniert werden; und bei dem die innere und die äußere Schürze (68, 70) an der Innensohle befestigt werden.

15. Verfahren nach Anspruch 14, bei dem ferner eine starre Außensohle (32) an einem unteren Abschnitt der Innensohle befestigt wird.

16. Verfahren nach Anspruch 15, bei dem ferner eine Eiskufenhalterung (16) an einer Unterseite der starren Außensohle befestigt wird.

17. Verfahren nach Anspruch 16, bei dem ferner eine Materialschicht (72; 74) an einer Außenseite der Außenschale befestigt wird.

18. Verfahren nach Anspruch 12, bei dem ferner ein Innenfutter (22) an einer Innenseite der Außenschale befestigt wird.

19. Verfahren nach Anspruch 18, bei dem ferner ein Polsterungselement (26) zwischen dem Innenfutter und der Innenseite der Außenschale angebracht wird.

20. Verfahren nach Anspruch 14, wobei die Lage ferner einen oberen Abschnitt umfasst, der einem oberen Teil des hinteren Abschnitts des Oberteils der Form gegenüberliegt, so dass die Außenschale ferner einen Sehnenschutz umfasst, der nach Schritt (e) der Achillessehne gegenüberliegt.

21. Verfahren nach Anspruch 12, wobei der flüssige Kunststoff aus der Surlyn, Ethylenvinylacetat, thermoplastisches Polyurethan, Nylon 66, Hytrel, Polypropylen und Polyethylen umfassenden Gruppe ausgewählt ist.

22. Verfahren nach Anspruch 21, wobei das Stoffmaterial aus der Polyester, Nylon, Carbonfasern, Kunstfasern und Glasfasern umfassenden Gruppe ausgewählt ist.

## Revendications

1. Chaussure de patin montée (10) pour enfermer et supporter un pied humain lors de l'utilisation, le pied comportant un talon, un tendon d'Achille, une cheville avec une malléole interne et une malléole externe, une surface plantaire, des côtés interne et externe, une partie frontale supérieure et des orteils, ladite chaussure (10) comprenant : (a) une coque extérieure (12) comprenant une partie de talon (54) pour entourer le talon, une partie de cheville (56) pour entourer la cheville, des parties de côtés interne et externe (58, 60) pour enfermer les côtés interne et externe du pied respectivement, (b) une doublure intérieure (22) faite d'un matériau mou et comportant une surface intérieure pour entrer en contact avec le pied, (c) un renfort de pointe (14) pour enfermer les orteils, et (d) une languette (24) pour faire face à la partie frontale supérieure du pied, ladite languette s'étendant vers le haut et vers l'arrière à partir dudit renfort de pointe, ladite chaussure de patin étant **caractérisée en ce que** (i) ladite coque extérieure (12) comprend une première couche faite de textile non tissé fusionné avec un matériau plastique injecté et une seconde couche faite de matériau étoffe et dépourvue dudit matériau plastique injecté, ladite première couche ayant été stratifiée sur ladite seconde couche, (ii) ledit renfort de pointe (14) est fixé auxdites parties de côtés interne et externe (58, 60) de ladite coque extérieure, et (iii) ladite doublure intérieure (22) est fixée à une surface intérieure (62) de ladite coque extérieure (12).

2. Chaussure de patin montée selon la revendication 1, comprenant en outre une semelle première (30) pour faire face à la surface plantaire du pied.

3. Chaussure de patin montée selon la revendication 2, dans laquelle chacune desdites parties de côtés interne et externe comprend une jupe (68 ; 70) faisant saillie vers le bas à partir de son bord inférieur.

4. Chaussure de patin montée selon la revendication 3, dans laquelle ladite jupe (68 ; 70) chevauche une partie de ladite semelle première (30) et est fixée à ladite semelle première.

5. Chaussure de patin montée selon la revendication 1, dans laquelle ladite partie de talon (54) est sensiblement en forme de coupelle pour suivre le contour du talon du pied.

6. Chaussure de patin montée selon la revendication 1, dans laquelle ladite surface de ladite doublure intérieure (22) est prévue pour entrer en contact avec le talon, la cheville et les côtés externe et interne du pied.

7. Chaussure de patin selon la revendication 1, comprenant en outre une assise plantaire (28) montée à l'intérieur de ladite coque extérieure (12), ladite assise plantaire comprenant une surface supérieure (78) pour recevoir la surface plantaire du pied et une paroi (80) faisant saillie vers le haut à partir de ladite surface supérieure, ladite paroi entourant partiellement le talon et s'étendant jusqu'à une ligne interne du pied.

8. Chaussure de patin selon la revendication 1, dans laquelle ladite coque extérieure (12) comprend en outre un protège-tendon (66) pour faire face au moins partiellement à une partie arrière du tendon d'Achille.

9. Chaussure de patin selon la revendication 4, comprenant en outre une semelle seconde (32) fixée à une surface inférieure de ladite semelle première.

10. Patin à glace (1) comprenant une chaussure de patin (10) selon la revendication 9, ledit patin à glace comprenant un porte-lame de patin à glace (16) monté sur une surface inférieure de ladite semelle seconde (32).

11. Patin à glace comprenant une chaussure de patin selon la revendication 2, ledit patin à glace comprenant un porte-lame de patin à glace (16) monté sur une surface inférieure de ladite semelle première.

12. Procédé de fabrication d'une chaussure de patin montée (10) pour enfermer un pied humain lors de l'utilisation, le pied comportant un talon, un tendon d'Achille, une cheville avec une malléole interne et une malléole externe, une surface plantaire, des côtés interne et externe et des orteils, ledit procédé comprenant les étapes consistant à : (a) fournir un moule mâle-femelle (34) comportant des sections mâle et femelle (36, 38) pour définir une cavité de moule entre celles-ci, la section mâle (36) comportant des côtés (40, 42), une partie arrière (44) et une partie inférieure (46) pour définir une forme tridimensionnelle correspondant à la forme tridimensionnelle externe du pied, la section femelle (38) définissant un évidement (50) pour recevoir la section mâle, la section mâle comprenant une pluralité de canaux internes (52) pour admettre un matériau plastique liquide dans la cavité de moule ; (b) fournir une feuille préalablement coupée (100) faite de matériau étoffe stratifié sur un textile non tissé ; (c) placer la feuille sur la section mâle (36) du moule de sorte que le textile non tissé entre en contact avec les côtés et la partie arrière de la section mâle (36) du moule ; (d) fermer les sections mâle et femelle (36, 38) du moule, ledit procédé étant **caractérisé en ce qu'**il comprend l'étape consistant à (e) injecter un matériau plastique liquide dans les canaux internes (52) à une température entre 160°C et 200°C et à une pression entre 6,79 MPa (985 psi) et 7 MPa (1015 psi) de sorte que le matériau plastique liquide s'étale sur la feuille (100), pousse la feuille contre l'évidement (50) de la section femelle (38) du moule, remplisse la cavité de moule et se fusionne avec le textile non tissé seulement pour former, après le refroidissement, une coque extérieure (12) comportant une première couche faite de textile non tissé fusionné avec du matériau plastique injecté et une seconde couche faite de matériau étoffe dépourvue de matériau plastique injecté, ladite coque extérieure comprenant une partie de talon (54) pour entourer le talon, une partie de cheville (56) pour entourer la cheville, des parties de côtés interne et externe (58, 60) pour enfermer les côtés interne et externe du pied respectivement ; ledit procédé comprenant en outre les étapes consistant à (f) ouvrir les sections mâle et femelle du moule ; et (g) retirer la coque extérieure (12) du moule.

13. Procédé selon la revendication 12, dans lequel la feuille (100) s'étend en outre partiellement par-dessus la partie inférieure de la section mâle de sorte que la coque extérieure comprenne en outre des jupes interne et externe (68, 70) après l'étape (e).

14. Procédé selon la revendication 13, comprenant en outre les étapes consistant à positionner une semelle première (30), un renfort de pointe (14) et la coque extérieure par-dessus une forme ; et fixer les jupes interne et externe (68, 70) à la semelle première.

15. Procédé selon la revendication 14, comprenant en outre l'étape consistant à fixer une semelle seconde rigide (32) à une partie inférieure de ladite semelle première.

16. Procédé selon la revendication 15, comprenant en outre l'étape consistant à fixer un porte-lame de patin à glace (16) à une surface inférieure de ladite semelle seconde rigide.

17. Procédé selon la revendication 16, comprenant en outre l'étape consistant à fixer une couche de matériau (72 ; 74) à une surface externe de la coque extérieure.

18. Procédé selon la revendication 12, comprenant en outre l'étape consistant à fixer une doublure intérieure (22) à une surface intérieure de la coque extérieure.

19. Procédé selon la revendication 18, comprenant en outre l'étape consistant à placer un élément de matelassage (26) entre la doublure intérieure et la surface intérieure de la coque extérieure.

20. Procédé selon la revendication 14, dans lequel la feuille comprend en outre une partie supérieure faisant face à une partie supérieure de la partie arrière de la section mâle du moule de sorte que la coque extérieure comprenne en outre un protège-tendon pour faire face au tendon d'Achille après l'étape (e).

21. Procédé selon la revendication 12, dans lequel le matériau plastique liquide est sélectionné parmi le groupe comprenant du surlyn, de l'éthylène-acétate de vinyle, du polyuréthane thermoplastique, du nylon66, du hytrel, du polypropylène et du polyéthylène.

22. Procédé selon la revendication 21, dans lequel le matériau étoffe est sélectionné parmi le groupe constitué de polyester, de nylon, de fibres de carbone, de fibres synthétiques et de fibre de verre.
